Europäisches Patentamt

European Patent Office

Office européen des brevets

(19)

(11) **EP 0 559 878 B1**

(12) **FASCICULE DE BREVET EUROPEEN**

(45) Date de publication et mention
de la délivrance du brevet:
**11.12.1996 Bulletin 1996/50**

(21) Numéro de dépôt: **92921321.3**

(22) Date de dépôt: **22.09.1992**

(51) Int Cl.[6]: **H01S 3/101**

(86) Numéro de dépôt international:
**PCT/FR92/00878**

(87) Numéro de publication internationale:
**WO 93/06641 (01.04.1993 Gazette 1993/09)**

(54) **LASER DE PUISSANCE A DEFLEXION**

HOCHLEISTUNGS-LASER MIT STRAHLABLENKUNG

HIGH POWER DEFLECTION LASER

(84) Etats contractants désignés:
**DE FR GB IT**

(30) Priorité: **27.09.1991 FR 9111912**

(43) Date de publication de la demande:
**15.09.1993 Bulletin 1993/37**

(73) Titulaire: **THOMSON-CSF**
**75008 Paris (FR)**

(72) Inventeurs:
• **HUIGNARD, Jean-Pierre**
**F-92045 Paris-La Défense Cédex 67 (FR)**
• **AYRAL, Jean-Luc**
**F-92045 Paris-La Défense Cédex 67 (FR)**
• **PUECH, Claude**
**F-92045 Paris-La Défense Cedex 67 (FR)**

(74) Mandataire: **Guérin, Michel et al**
**THOMSON-CSF**
**SCPI**
**B.P. 329**
**50, rue Jean-Pierre Timbaud**
**92402 Courbevoie Cédex (FR)**

(56) Documents cités:
**EP-A- 0 390 662**   **EP-A- 0 390 663**
**WO-A-90/10889**   **WO-A-90/13056**

• **OPTICS COMMUNICATIONS. vol. 52, no. 2, 15
Novembre 1984, AMSTERDAM NL pages 136 -
140 M.M. DEVANE 'Temporal investigation of
phase conjugation, with enhancement, in
magnesium tetraphenyl porphyrin (MgTPP)'**

Printed by Jouve, 75001 PARIS (FR)

## Description

L'invention concerne un laser de puissance à déflexion.

On connaît dans la technique des lasers intégrant la fonction de commande de l'orientation angulaire du faisceau optique émis. Cependant de tels lasers sont de faible puissance.

L'invention concerne un laser de puissance intégrant dans sa structure une commande angulaire de l'émission.

Le traitement des faisceaux lasers de puissance par des moyens d'optique non linéaire permet d'envisager une amélioration importante de la qualité spatiale des faisceaux émis, et d'introduire de nouvelles fonctions de contrôle angulaire ou de mise en phase d'oscillateurs. L'objet de l'invention réside dans une structure laser exploitant des milieux non linéaires à variation d'indice photoinduite pour assurer simultanément les deux propriétés suivantes :

- génération de faisceaux limités par diffraction,
- déflexion grand champ angulaire.

On connait dans la technique des dispositifs prévoyant une amplification optique avec conjugaison de phase tels que dans les documents EP 0 390 662 et W0 90/10889. On connait également des dispositifs de déflexion optique tels que décrits dans les documents WO90/13056 et EP-A-0 390 663.

La structure du laser présentée est du type oscillateur-amplificateur et elle met en oeuvre des matériaux non linéaires pour l'inscription dynamique de réseaux d'indice et la génération d'ondes conjuguées. De plus, la direction du faisceau de haute énergie émis par le laser résulte de la déflexion acousto-optique d'un faisceau de faible énergie.

L'invention concerne donc un laser de puissance à déflexion du type oscillateur-amplificateur comportant au moins :

- un milieu en matériau optiquement non linéaire éclairé par un premier faisceau de direction fixe et un deuxième faisceau de direction variable lesdits premier et deuxième faisceaux créant un réseau d'indice dans le milieu en matériau non linéaire;
- un milieu amplificateur placé sur la direction du premier faisceau recevant au moins une partie du premier faisceau ,
- un premier dispositif séparateur de faisceau placé sur le trajet de faisceau amplifié,

caractérisé en ce que le milieu amplificateur est placé de façon à recevoir également au moins une partie du deuxième faisceau selon la direction du premier faisceau les amplifiant selon un double passage et retransmettant un faisceau amplifié conjugué en phase vers le milieu en matériau non linéaire qui réfléchit le faisceau amplifié dans la direction du deuxième faisceau.

Les différents objets et caractéristiques de l'invention apparaîtront plus clairement dans la description qui va suivre et dans les figures annexées qui représentent :

- la figure 1, un exemple général de réalisation de la structure selon l'invention ;
- la figure 2, un exemple détaillé de réalisation de la structure de l'invention ;
- la figure 3, une variante de réalisation du dispositif de l'invention ;
- la figure 4, une autre variante de réalisation du dispositif de l'invention.

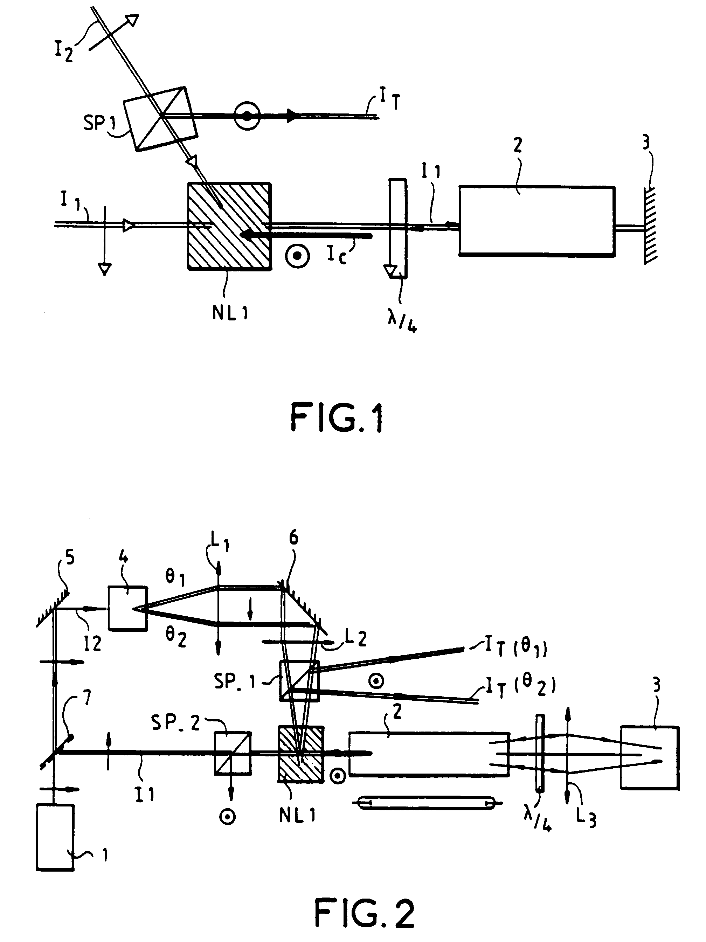

On va donc tout d'abord décrire de façon générale le dispositif de l'invention en se basant sur la figure 1.

Deux faisceaux polarisés I1 et I2 sont transmis à un milieu en matériau non linéaire NL1. Le faisceau I2 peut être commandé angulairement par des moyens non représentés. Les deux faisceaux I1 et I2 interfèrent dans le milieu non linéaire et créent un réseau d'indice qui provoque la transmission d'une partie au moins de la lumière vers un amplificateur optique 2. La lumière fait au moins un aller-retour dans l'amplificateur 2 en raison de la réflexion sur un dispositif de réflexion 3.

Un faisceau amplifié Ic est renvoyé vers le milieu non linéaire NL1.

La direction de polarisation de ce faisceau Ic est tournée de 90° par rapport à la direction de polarisation des faisceaux I1 et I2 en raison de la présence de la lame quart d'onde $\lambda/4$. Le faisceau amplifié Ic est réfléchi au moins en grande partie par le milieu non linéaire, selon la direction du faisceau I2. Un séparateur de polarisation SP permet ensuite d'extraire le faisceau amplifié et d'émettre un faisceau IT.

Le dispositif de l'invention comporte, comme cela est représenté sur la figure 2, les éléments suivants :

- un laser oscillateur monomode longitudinal 1 fonctionnant en régime déclenché ;
- un amplificateur 2 fonctionnant en double passage après réflexion ;
- un miroir conjugué ou à conjugaison de phase autopompé 3 permettant de réfléchir l'onde transmise par l'amplificateur 2 ;

- un milieu non linéaire NL1 servant de support à l'inscription dynamique de réseaux photoinduits à efficacité de diffraction élevée et dont la fonction sera détaillée ci-dessous ;
- un déviateur de faisceau 4 possédant la résolution spatiale souhaitée dans un balayage angulaire donnée ;
- un séparateur de faisceau 7 permettant de séparer le faisceau émis par l'oscillateur en un faisceau I1 et un faisceau I2.
- des dispositifs de focalisations L1, L2, L3 ;
- des miroirs de renvoi 5 et 6 ;
- une lame quart d'onde $\lambda/4$ placée entre l'amplificateur 2 et le miroir à conjugaison de phase 3.

Le fonctionnement de cette structure laser incluant une fonction de balayage grand champ est le suivant : le faisceau issu de l'oscillateur 1 est séparé en deux faisceaux I1 - I2 dont l'un subit une déflexion angulaire $\theta1$ ou $\theta2$ (bloc de déflexion acousto-optique par exemple dans le déviateur de faisceau 4). Le système optique L1 - L2 image le centre de rotation du faisceau sur le milieu non linéaire NL1 éclairé par la figure d'interférence des deux faisceaux I1 et I2. L'interaction choisie est telle qu'il n'y a aucune redistribution de l'énergie entre les deux faisceaux I1 et I2 issus du matériau non linéaire (Matériau à réponse locale : la variation d'indice photoinduite est en phase avec l'illumination spatiale de la figure d'interférence). Le faisceau I1 subit une réflexion sur le miroir conjugué. Il y a donc un double passage du faisceau I1 dans l'amplificateur laser 2 à fort gain. Dans ces conditions, on dispose en sortie de l'amplificateur 2 d'un faisceau de puissance $I_c$ parfaitement corrigé des distorsions de phase et dont l'intensité vaut :

$$I_c : \quad I_1 \times R_c \exp 2 \gamma L$$

avec

$R_c :$     coefficient de réflexion du miroir conjugué
$L :$     longueur du barreau
$\gamma :$     coefficient de gain laser

Ce faisceau $I_c$ est incident sur le milieu non linéaire NL1 où il subit une diffraction par le réseau d'indice photoinduit par les faisceaux $I_1$ - $I_2$. Il en résulte un faisceau transmis $I_T$ de haute énergie dont la direction est celle du faisceau $I_2$ issu du déflecteur 4. Dans cette interaction à quatre ondes tous les faisceaux peuvent être considérés à la même fréquence puisque le décalage Brillouin (de l'ordre du GHz) reste faible vis-à-vis de la fréquence optique. Le faisceau $I_c$ relit le réseau sous l'incidence de Bragg conduisant au rendement optimum de diffraction :

$$I_T = I_1 \times \eta \, R_c \exp 2 \gamma L$$

avec

$$\eta = \sin^2 \P \, d\Delta n/\lambda$$

d, $\Delta n$ étant respectivement l'épaisseur et la modulation d'indice du milieu NL1. Dans cette fonction de relecture du réseau photoinduit on cherchera à obtenir un rendement $\eta$ proche de l'unité correspondant à la condition d $\Delta n \simeq \lambda/2$.

Le mode de fonctionnement du système laser intégrant la fonction de déflexion du réseau est donc basé sur les trois fonctionnements suivants :

a) choix d'une direction de déflexion du faisceau $I_2$ et interférence des deux ondes dans le milieu NL1 ;
b) amplification double passage et conjugaison de phase du faisceau $I_1$ ;
c) obtention du faisceau de puissance émis $I_T$ dans la direction de $I_2$ par la diffraction efficace de $I_c$ sur le réseau photoinduit.

Comme indiqué sur la figure 2, les deux faisceaux $I_1$ et $I_2$ ont même polarisation, par exemple parallèle au plan de la figure. Une lame $\lambda/4$ interposée entre l'amplificateur laser 2 et la lentille de focalisation L3 génère après double traversée une polarisation tournée de 90°. Cette polarisation horizontale (perpendiculaire à la polarisation incidente) sert à la lecture du réseau photoinduit et est réfléchie par le séparateur de polarisation SP-1. De même un séparateur de polarisation SP-2 interposé sur le faisceau $I_1$ évite le retour d'une faible partie de la lumière non diffractée dans la direction de l'oscillateur.

Des impulsions délivrées par l'oscillateur 1 déclenché par des moyens classiques (cellules électro ou acousto-optiques) sont de l'ordre de 10 à 20 ns. L'inscription du réseau dans NL1 doit s'effectuer avec une constante de temps de l'ordre de 1 à 2 ns, constante comparable à l'établissement du miroir Brillouin 3. La dimension L de l'amplificateur restant limitée (L+cellule 3 Brillouin 3 > 30 cm), les interactions non linéaires d'inscription et de lecture des réseaux sont effectuées de façon quasi simultanée (retard de l'ordre 2 ns pour la lecture de NL-1). La cadence des impulsions délivrées par de tels lasers étant de 10 à quelques 100 Hz, des temps de relaxation des réseaux photoinduits de l'ordre de quelques micro-secondes sont tout à fait compatibles avec l'application envisagée. De même la constante de temps du déflecteur 4 de quelques micro-secondes en technologie acousto-optique est parfaitement adaptée au positionnement dynamique du faisceau (impulsion unique ou série d'impulsions) dans une direction angulaire quelconque.

Le choix du milieu non linéaire NL1 doit être tel qu'on satisfasse, outre le temps de réponse du milieu, les critères suivants :

- L'amplitude de la variation d'indice $\Delta n$ pour une densité de puissance donnée issue de l'oscillateur. La densité de puissance incidente sur le matériau peut être ajustée par l'intermédiaire du diamètre des faisceaux $I_1$ - $I_2$.

$$\Delta n = n_2 \times (I_1 + I_2) \text{ W/cm}^2$$

avec $n_2$ = coefficient non linéaire

- Faible absorption pour obtenir une efficacité de diffraction proche de 100 % du faisceau $I_c$ dans la direction $I_2$.
- Acceptance angulaire convenable pour l'inscription du réseau de pas variable dû à l'interférence de $I_1$ et $I_2$ (10 à 20° par exemple).

Les mécanismes non linéaires possibles satisfaisant à ces critères sont :

- les effets Kerr optiques ($CS_2$ - cristaux liquides, cristaux organiques ....)
- les effets photoréfractifs (SBN, GaAs, BSO ...)
- l'absorption saturée ("dyes", semiconducteurs ...)
- les matériaux lasers (YAG, Ruby, verre, Nd ...)

A titre d'exemple on donnera ci-dessous une application numérique correspondant à l'utilisation de l'effet Kerr optique dans $CS_2$ (matériau référence $n_2 = 2 \times 10^{-18} \text{cm}^2 . \text{W}^{-1}$). Ce matériau a l'avantage de posséder les propriétés requises pour la mise en évidence des effets.

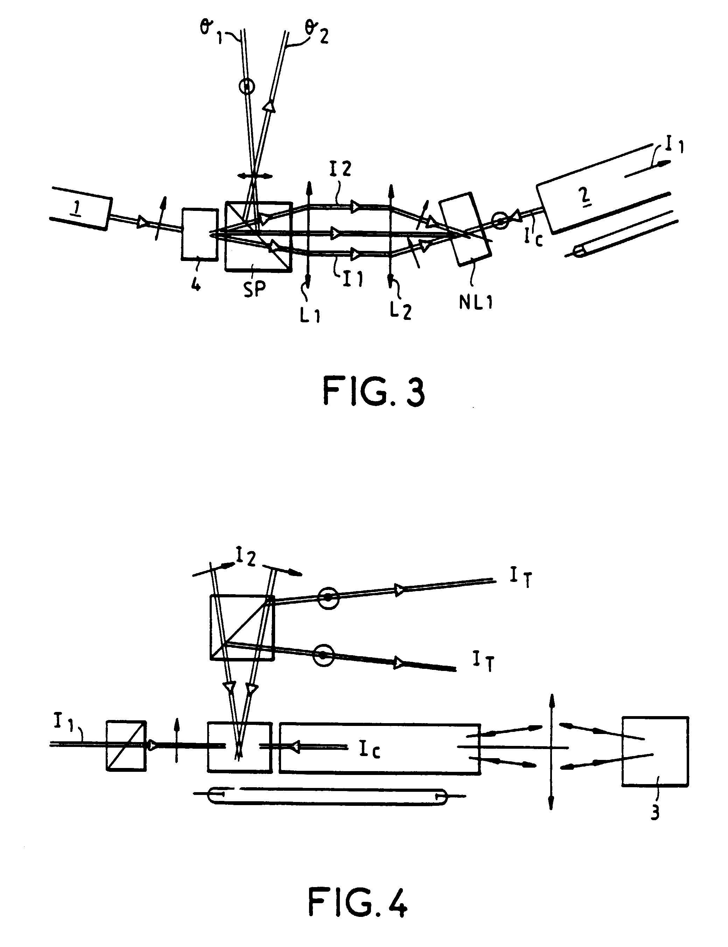

La structure laser de la figure 3 représente une variante de réalisation de l'invention plus compacte dans le cas le plus courant où le déflecteur 4 est du type acousto-optique. La partie non diffractée par la cellule constitue le faisceau $I_1$. La partie diffractée est le faisceau $I_2$ dont l'orientation est choisie par le déflecteur. Le séparateur de polarisation SP permet d'extraire le faisceau de puissance lors de son retour de l'amplificateur. L'adaptation du faisceau en sortie du déflecteur 4 au diamètre du barreau amplificateur peut être, si nécessaire, réalisée par l'intermédiaire d'un système optique afocal.

On retrouve le milieu non linéaire NL1, situé entre le séparateur SP et l'amplificateur 2, qui permet de retransmettre le faisceau $I_c$ selon la direction du faisceau $I_2$.

La structure laser de la figure 4 utilise comme matériau non linéaire NL1 le même matériau que le milieu laser. Cette approche présente plusieurs avantages indiqués comme suit ;

- le milieu non linéaire NL1 est identique à celui utilisé pour l'amplification des faisceaux par émission stimulée : il n'est pas nécessaire de rechercher un matériau annexe ayant toutes les caractéristiques voulues ;
- le mécanisme non linéaire responsable de la génération du faisceau de sortie $I_T$ est la saturation du gain de l'amplificateur laser ;
- la fonction de traitement du faisceau (dans le cas présent déflexion angulaire) peut être intégrée à la fonction d'amplification par émission stimulée. Sur la figure 4 les deux fonctions - réseau photoinduit NL1 et amplification double passage sont spatialement disjointes mais réalisées dans le même matériau maintenu en inversion de population par pompage flash (ou diodes).

A titre d'exemple, on fournit ci-après un exemple dans lequel les différents éléments constitutifs sont les suivants :

- Oscillateur monomode :
  Laser Nd:YAG pompé diodes
  10 ns - 40 mJ. pulse

- Bloc de déflexion acousto-optique 2D-TeO$_2$

Nombre de points : 500 x 500
Temps d'accès : 5 µs
Efficacité : 50 %
Excursion angulaire : 10° (Ø$_d$ = 2 mm)

- Miroir à conjugaison de phase

Cellule Brillouin : $CH_4$ = 100 atm
Réflectivité de l'onde : 70 %

- Ampli laser double passage

Diamètre Ø$_L$ : 7 mm
Gain laser : 0,15 cm$^{-1}$
Longueur L : 10 cm

- Milieu NL-1
  Effet Kerr $CS_2$

$$I_1 + I_2 \simeq 30 \text{ mJ} - \phi \simeq 1 \text{ mm}$$

$$n = n_o + 4{,}2 \times 10^{18} \times I \text{ (Wm}^{-2)}$$

Densité de puissance incidente sur le milieu :

$$I = 10^8 \text{ W·cm}^{-2} = 10^{12} \text{ W·m}^2$$

Variation d'indice photoinduite

$$\Delta n = 1{,}26.10^{-5}$$

Epaisseur de la cellule pour obtenir une efficacité de 100 % sur l'onde I$_C$

$$d \simeq \lambda/2 \, \Delta n = 40 \text{ mm}$$

Energie émise par le laser

$$I_T = 0{,}7 \times 30 \times 10^{-3} \times \exp(0{,}3 \times 10)$$

$$I_p \simeq 600 \text{ mJ}$$

Le dispositif de l'invention présente les avantages suivants :

- Le faisceau subissant l'amplification et la conjugaison de phase reste fixe. Dans ces conditions tout le volume du milieu amplificateur est utilisé. Par comparaison, à certaines techniques de microbalayage connues, le faisceau occupe une partie limitée du volume actif (50 % typiquement).
- La structure laser proposée permet de réaliser une source de haute énergie présentant une très bonne qualité spatiale du faisceau avec un contrôle rapide de la direction d'émission (quelques micro-secondes typiquement).
- La structure met en oeuvre un milieu non linéaire NL1 dont la seule fonction est d'assurer la diffraction dynamique du faisceau conjugué dans un champ angulaire donné.

- La structure est compatible avec l'utilisation de plusieurs étages amplificateurs.

La description qui précède n'a été faite qu'à titre d'exemple. D'autres variantes peuvent être envisagées sans sortir du cadre de l'invention. Notamment, les modes de réalisation des différents éléments du dispositif selon l'invention n'ont été fournies que pour illustrer la description.

## Revendications

1. Laser de puissance à déflexion du type oscillateur-amplificateur comportant au moins :

   - un milieu en matériau optiquement non linéaire (NL1) éclairé par un premier faisceau (I1) de direction fixe et un deuxième faisceau (I2) de direction variable, les premier et deuxième faisceaux créant un réseau d'indice dans le milieu en matériau non linéaire;
   - un milieu amplificateur (2) placé sur la direction du premier faisceaux (I1) recevant au moins une partie du premier faisceau,
   - un premier dispositif séparateur de faisceau (SP1) placé sur le trajet de faisceau amplifié (Ic),

   le milieu amplificateur (2) étant placé de façon à recevoir également au moins une partie du deuxième faisceau selon la direction du premier faisceau, les amplifiant selon un double passage et retransmettant un faisceau amplifié (Ic) conjugué en phase vers le milieu en matériau non linéaire (NL1) qui réfléchit le faisceau amplifié (Ic) dans la direction du deuxième faisceau (I2).

2. Laser selon la revendication 1, caractérisé en ce qu'il comporte un déflecteur optique commandable (4) fournissant le deuxième faisceau de direction variable.

3. Laser selon la revendication 2, caractérisé en ce qu'il comporte une source optique (1) et un deuxième séparateur de faisceau (7) recevant un faisceau émis par la source optique et fournissant en échange le premier et le deuxième faisceau, le déflecteur étant placé sur le trajet du deuxième faisceau.

4. Laser selon la revendication 1, caractérisé en ce que :

   - le premier et le deuxième faisceau sont polarisés selon la même direction de polarisation ;
   - il comporte une lame quart d'onde placée en aval du milieu en matériau non linéaire (NL1) ;
   - le premier séparateur de faisceau (SP1) est un séparateur de polarisation.

5. Laser selon la revendication 1, caractérisé en ce qu'il comporte un miroir à conjugaison de phase (3) associé à l'amplificateur (2) et réfléchissant vers l'amplificateur les premier et deuxième faisceaux.

6. Laser selon la revendication 2, caractérisé en ce que le déflecteur (4) est un dispositif de déflexion acousto-optique.

7. Laser selon la revendication 1, caractérisé en ce que le milieu non linéaire (NL1) est un dispositif à effet Kerr, ou bien un cristal photoréfractif ou bien un matériau laser.

8. Laser selon la revendication 7, caractérisé en ce que le milieu non linéaire (NL1) et l'amplificateur (2) sont réalisés dans un même matériau monobloc.

9. Laser selon la revendication 5, caractérisé en ce que le miroir à conjugaison de phase (3) est une cellule Brillouin.

## Patentansprüche

1. Leistungslaser mit Strahlablenkung vom Oszillator-Verstärkertyp, mit mindestens:

   - einem Milieu aus optisch nicht-linearem Material (NL1), das von einem ersten Strahl ($I_1$) fester Richtung und einem zweiten Strahl ($I_2$) variabler Richtung beleuchtet wird, wobei die beiden Strahlen ein Beugungsgitter in dem Milieu aus nicht-linearem Material erzeugen,

- einem Verstärkermilieu (2), das sich in der Richtung des ersten Strahls ($I_1$) befindet und mindestens einen Teil des ersten Strahls empfängt,
- einer ersten Strahlseparatorvorrichtung (SP1), die sich im Weg des verstärkten Strahls ($I_c$) befindet,

wobei das Verstärkungsmilieu (2) so angeordnet ist, daß es auch mindestens einem Teil des zweiten Strahls gemäß der Richtung des ersten Strahls empfängt, sie beide bei einem doppelten Durchlauf verstärkt und einen verstärkten, phasenkonjugierten Strahl ($I_c$) an das Milieu aus nicht-linearem Material (NL1) aussendet, das den verstärkten Strahl ($I_c$) in der Richtung des zweiten Strahls ($I_2$) reflektiert.

2. Laser nach Anspruch 1, dadurch gekennzeichnet, daß er ein steuerbares optisches Ablenkorgan (4) besitzt, das den zweiten Strahl mit variabler Richtung liefert.

3. Laser nach Anspruch 2, dadurch gekennzeichnet, daß er eine optische Quelle (1) und ein zweites Strahlseparatororgan (7) enthält, das einen von der optischen Quelle ausgesendeten Strahl empfängt und einen ersten und einen zweiten Strahl liefert, wobei dieses Organ sich im Verlauf des zweiten Strahls befindet.

4. Laser nach Anspruch 1, dadurch gekennzeichnet, daß

- der erste und der zweite Strahl gemäß der gleichen Polarisationsrichtung polarisiert sind,
- ein $\lambda/4$-Plättchen hinter dem Milieu aus nicht-linearem Material (NL1) liegt,
- das erste Strahlseparatororgan (SP1) ein Polarisationsseparator ist.

5. Laser nach Anspruch 1, dadurch gekennzeichnet, daß er einen Spiegel mit Phasenkonjunktion (3) in Verbindung mit dem Verstärker (2) enthält, der den ersten und den zweiten Strahl zum Verstärker reflektiert.

6. Laser nach Anspruch 2, dadurch gekennzeichnet, daß das Ablenkorgan (4) eine akusto-optische Ablenkvorrichtung ist.

7. Laser nach Anspruch 1, dadurch gekennzeichnet, daß das nicht-lineare Milieu (NL1) eine Kerr-Effekt-Vorrichtung oder ein photorefraktiver Kristall oder auch ein Lasermaterial ist.

8. Laser nach Anspruch 7, dadurch gekennzeichnet, daß das nicht-lineare Milieu (NL1) und der Verstärker (2) in einem gemeinsamen Materialblock realisiert sind.

9. Laser nach Anspruch 5, dadurch gekennzeichnet, daß der Spiegel mit Phasenkonjunktion (3) eine Brillouin-Zelle ist.

## Claims

1. Power laser with deflection of the oscillator-amplifier type, comprising at least:

- a medium made of optically non-linear material (NL1) illuminated by a first beam (I1) of fixed direction and a second beam (I2) of variable direction, the first and second beams creating an index grating in the medium made of non-linear material;
- an amplifying medium (2), placed along the direction of the first beam (I1) and receiving at least part of the first beam
- a first beam-splitting device (SP1) placed in the path of the amplified beam (Ic), the amplifying medium (2) being placed so that it also receives at least part of the second beam along the direction of the first beam, amplifying them with double transit and retransmitting a phase-conjugated amplified beam (Ic) towards the medium made of non-linear material (NL1) which reflects the amplified beam (IC) in the direction of the second beam (I2).

2. Laser according to Claim 1, characterised in that it comprises a controllable optical deflector (4) supplying the second beam of variable direction.

3. Laser according to Claim 2, characterised in that it comprises an optical source (1) and a second beam splitter (7) receiving a beam emitted by the optical source and supplying in exchange the first and second beam, the deflector being placed in the path of the second beam.

4. Laser according to Claim 1, characterised in that:

   - the first and second beams are polarised with the same polarisation direction;
   - it comprises a quarter-wave plate placed on the output side of the medium made of non-linear material (NL1);
   - the first beam splitter (SP1) is a polarisation splitter.

5. Laser according to Claim 1, characterised in that it comprises a phase conjugate mirror (3) associated with the amplifier (2) and reflecting towards the amplifier the first and second beams.

6. Laser according to Claim 2, characterised in that the deflector (4) is an acousto-optic deflection device.

7. Laser according to Claim 1, characterised in that the non-linear medium (NL1) is a Kerr effect device or a photo-refractive crystal or a laser material.

8. Laser according to Claim 7, characterised in that the non-linear medium (NL1) and the amplifier (2) are produced in the same single block of material.

9. Laser according to Claim 5, characterised in that the phase conjugate mirror (3) is a Brillouin cell.

# FIG.1

# FIG.2

FIG. 3

FIG. 4